# EUROPEAN PATENT SPECIFICATION

(11) **EP 2 113 903 B1**
(45) Date of publication and mention of the grant of the patent: **18.05.2016**
(21) Application number: 08019872.4
(22) Date of filing: 13.11.2008
(51) Int. Cl.: G09G 3/34

(54) **Backlight driving circuit and method for driving the same**
Gegenlicht-Ansteuerkreis und Ansteuerverfahren dafür
Circuit de commande de rétroéclairage et son procédé de commande

(30) Priority: 02.05.2008 KR 20080041290
(43) Date of publication of application: 04.11.2009
(73) Proprietor: LG Display Co., Ltd., Seoul 07336 (KR)
(72) Inventor: Lee, Tae Wook, Gyeonggi-do (KR)
(74) Representative: Ter Meer Steinmeister & Partner

(56) References cited:
- WO-A1-2007/046320
- US-A1- 2005 104 837
- US-A1- 2007 152 926
- US-A1- 2007 285 382

## Description

### BACKGROUND OF THE INVENTION

### Field of the Invention

The present invention relates to a backlight driving circuit, and more particularly, to a backlight driving circuit a method for driving the same, which are capable of preventing a flicker phenomenon and delay of response.

### Discussion of the Related Art

A liquid crystal display (LCD) device displays an image by controlling light transmittance values of liquid crystal cells in accordance with a video signal. An active matrix LCD device is advantageous in displaying a moving image because a switching element is provided for each pixel cell. For the switching element, a thin film transistor (TFT) is mainly used.

Such an LCD device includes a plurality of gate lines and a plurality of data lines, which intersect each other. The LCD device also includes pixels respectively formed in pixel regions defined by the gate lines and data lines.

In order to enable the LCD device to provide an active image effect, a technique for not only modulating data, but also modulating the luminance of backlight in accordance with the characteristics of the data, has been proposed.

In accordance with this technique, however, the luminance of backlight may be abruptly increased or decreased when the data amount difference between neighboring frames is large. Where such frames, which exhibit a large data amount difference, are successively generated, there is a problem in that a flicker phenomenon that the screen flickers occurs.

US 2007/0285382 A1 relates to systems and methods for generating, modifying and applying backlight array driving values.

US 2005/0104837 A1 discloses a driving method and an apparatus for a liquid crystal display, both using a comparison between the previous frame and the current frame to expand the contrast ratio and reduce the manufacturing cost. Further, a limited amount of data from the current image may be used: either using a limited area of the image or merely the amount of green in the overall image or the limited area. In the apparatus, an image signal modulator expands the contrast of the input data when the previous image is analogous to the current image to thereby generate output data. A timing controller re-arranges the output data to apply the output data to a data driver.

US 2007/0152926 A1 relates to an apparatus for driving a liquid crystal display device, said apparatus including a liquid crystal display panel having liquid crystal cells in respective regions defined by a plurality of gate and data lines, a data driver providing video signals to the data lines, a gate driver providing scan signals to the gate lines, a timing controller controlling the gate and data drivers, and generates a plurality of dimming signals by resetting a dimming curve in accordance with input data, and a light emitting diode backlight unit driving light emitting diode groups in accordance with the plurality of dimming signals to provide light to the liquid crystal display panel.

WO 2007/046320 A1 discloses that a video with a display definition most suitable for the type of the video content to be displayed can be displayed. When the luminance of the backlight is controlled according to the APL of the video signal measured by an APL measuring section, the follow-up ability of the variation of the backlight luminance to the variation of the feature value of the video signal is set depending on the genre so that the display video can be viewed without any sense of discomfort. That is, the APL of the video signal measured by the APL measuring section is inputted into a filter. The degree of variation of the APL along the time axis is subjected to weighted average control to control the follow-up ability of the control of the backlight luminance. In this control, the genre of the video to be displayed is judged, and the constant used for the weighted averaging of the filter is varied depending the judged genre. Thus, the display definition for each genre can be optimized.

### SUMMARY OF THE INVENTION

Accordingly, the present invention is directed to a backlight driving circuit and a method for driving the same that substantially obviate one or more problems due to limitations and disadvantages of the related art.

An object of the present invention is to provide a backlight driving circuit and a method for driving the same, which are capable of preventing a flicker phenomenon, and achieving a high response rate coping with an abrupt image variation by performing an image comparison for every frame, to determine image characteristics, and controlling whether or not a filter unit should operate, based on the result of the determination.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings. Objects of the present invention are achieved by subject matters of the independent claims.

The backlight driving apparatus and the driving method thereof according to the present invention performs an image comparison for every frame, to determine the characteristics of an image of the frame, and controls whether the filtering unit should operate, based on the result of the image comparison. Accordingly, it is possible to prevent a flicker phenomenon, and to obtain a high response rate even in an abrupt image variation.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and along with the description serve to explain the principle of the invention. In the drawings:
FIG. 1 is a block diagram illustrating a liquid crystal display (LCD) device;
FIG. 2 is a block diagram illustrating a backlight driver according to a comparative example;
FIG. 3 is a schematic view illustrating a display area shown in FIG. 2;
FIG. 4 is a block diagram for explaining the configuration and operation of a filtering unit;
FIG. 5 is a graph for explaining the results of comparison between the luminance of light generated based on original data and the luminance of light generated based on modulated data;
FIG. 6 is a block diagram illustrating a backlight driving circuit according to an embodiment of the present invention;
FIGs. 7A and 7B are views illustrating an image variation displayed on the display area when the data variation between neighboring frames is small;
FIGs. 8A to 8C are flow charts for explaining an operation sequence of a selective filtering unit for an image, for example, images shown in FIGs. 7A and 7B;
FIGs. 9A and 9B are views illustrating an image variation displayed on the display area when the data variation between neighboring frames is large; and
FIGs. 10A to 10C are flow charts for explaining an operation sequence of a selective filtering unit for an image, for example, images shown in FIGs. 9A and 9B.

### DETAILED DESCRIPTION OF THE INVENTION

Reference will now be made in detail to the preferred embodiments of the present invention associated with a backlight unit, examples of which are illustrated in the accompanying drawings.

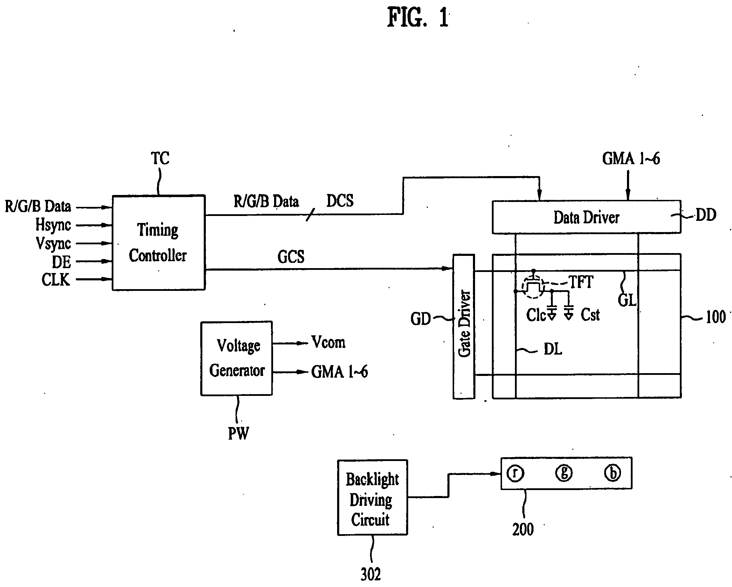

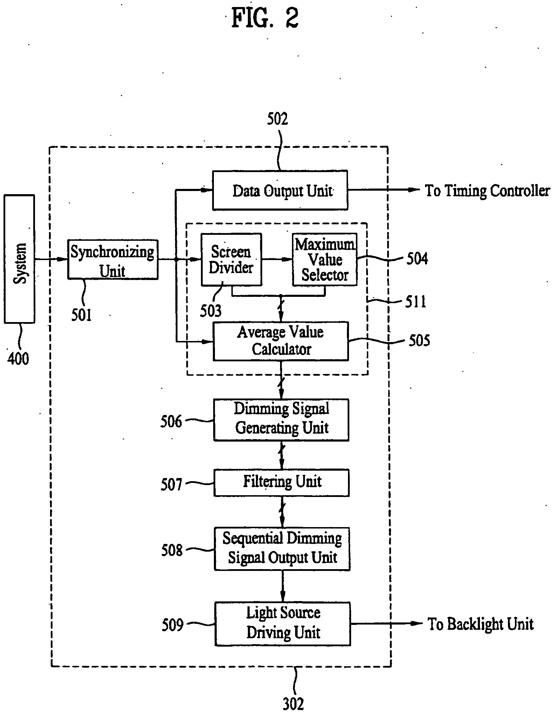

FIG. 1 is a block diagram illustrating a liquid crystal display (LCD) device. FIG. 2 is a block diagram illustrating a backlight driver according to a comparative example.

As shown in FIG. 1, the LCD device includes a display panel 10, which includes gate lines GL, data lines DL intersecting with the gate lines GL, and thin film transistors (TFTs) formed at respective intersections of the gate lines GL and data lines DL. The LCD device also includes a data driver DD for inputting data to the data lines DL of the display panel 100, a gate driver GD for inputting scan pulses to the gate lines GL of the display panel 100, a backlight unit 200 including a plurality of light sources r, g, and b to irradiate light to the display panel 100, a backlight driving circuit 302 for driving the light sources r, g, and b of the backlight unit 200, and a timing controller TC for controlling the data driver DD, gate driver GD of the display panel 100 and a backlight driver 300.

The light sources r, g, and b are light emitting diodes (LEDs), and include a plurality of red light sources r for emitting red light, a plurality of green light sources g for emitting green light, and a plurality of blue light sources g for emitting blue light. White light is generated in accordance with a combination of red light from the red light sources r, green light from the green light sources g, and blue light from the blue light sources g.

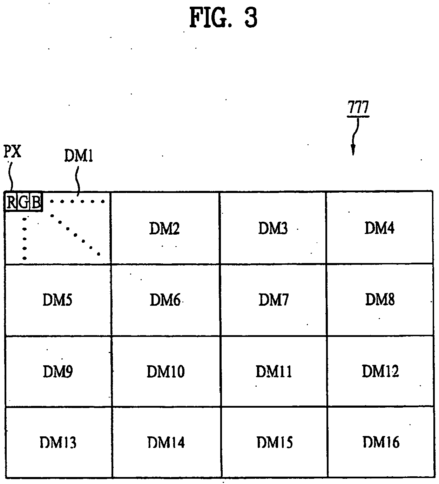

As shown in FIG. 3, the display panel 100 includes a plurality of unit pixels PX each adapted to display a unit image. Each unit pixel PX includes a red pixel R for displaying a red image, a green pixel G for displaying a green image, and a blue pixel B for displaying a blue image.

Each of the pixels R, G, and B includes a TFT for switching data from the corresponding data line DL in response to a scan pulse from the corresponding gate line GL, and a liquid crystal cell for displaying an image in accordance with the switched data from the TFT. The TFT includes a source electrode connected to the corresponding data line DL, a drain electrode connected to a pixel electrode of the corresponding liquid crystal cell, and a gate electrode connected to the corresponding gate line GL. The display panel 100 includes a color filter array substrate and a TFT array substrate, which are assembled to each other under the condition in which a liquid crystal layer is interposed between the color filter array substrate and the TFT array substrate. Color filters and common electrodes are formed on the color filter array substrate. Each color filter includes red, green, and blue color filter layers each functioning to allow light of a specific wavelength to pass therethrough, and thus to achieve color display. A black matrix is formed between adjacent color filter layers of different colors.

Each liquid crystal cell includes a liquid crystal capacitor for sustaining data for one frame period, and an auxiliary capacitor for stably sustaining the data for the frame period of the data.

The timing controller TC re-arranges digital video data input from a system via the backlight driving circuit 302 into red (R) data, green (G) data, and blue (B) data. The R data, G data, and B data re-arranged by the timing controller TC are input to the data driver DD.

The timing controller TC generates a data control signal DCS and a gate control signal GCS, using a horizontal synchronizing signal Hsync, a vertical synchronizing signal Vsync, and a clock signal CLK, and supplies the generated signals DCS and GCS to the data driver DD and gate driver GD, respectively. The data control signal DCS includes a dot clock, a source shift clock, a source enable signal, a polarity inverting signal, etc. The gate control signal GCS includes a gate start pulse, a gate shift clock, a gate output enable signal, etc.

The data driver DD samples the data input thereto in accordance with the data control signal DCS from the timing controller TC, latches the sampled data at every horizontal time 1H, 2H, ... in an amount corresponding to one line, and supplies the latched data to the data lines DL. That is, the data driver DD converts the R/G/B data supplied from the timing controller TC into analog pixel signals, using gamma voltages GMA1 to GMA6, and supplies the analog pixel signals to the data lines DL.

The gate driver GD includes a shift register for generating a scan pulse in a sequential manner in response to the gate start pulse included in the gate control signal GCS supplied from the timing controller TC, and a level shifter for shifting the voltage of the generated scan pulse to a voltage level suitable for the driving of the liquid crystal cells. The gate driver GD supplies a gate-high voltage to the gate lines GL in a sequential manner in response to the gate control signal GCS.

A voltage generator PW supplies a common electrode voltage Vcom to the display panel 100, and supplies gamma voltages GMA1 to GMA6 to the data driver DD.

As shown in FIG. 2, the backlight driving circuit 302 according to the comparative example includes a synchronizer 501, a data output unit 502, an average data generating unit 511, a dimming signal generating unit 506, a filtering unit 507, a sequential dimming signal output unit 508, and a light source driving unit 509.

Hereinafter, the constituent elements of the backlight driving circuit 302 will be described.

The synchronizing unit 501 supplies R/G/B data input from a system 400 to the data output unit 502 and average data generating unit 511 in synchronism with a clock signal.

The data output unit 502 supplies the R/G/B data to the timing controller TC in synchronism with the clock signal.

As shown in FIG. 3, the average data generating unit 511 divides a display area 777 of the display panel 100 into n ("n" is a natural number of 2 or more) display regions DM1 to DM16. The average data generating unit 511 calculates an average value of data supplied to each of the display regions DM1 to DM16, and thus generate n average data pieces. That is, the display panel 100 includes a plurality of pixels R, G, and B, and a display area 777, on which an image is displayed by the pixels R, G, and B. The average data generating unit 511 calculates an average value of data supplied to the pixels R, G, and B in each of the display regions DM1 to DM16, and thus generates n average data pieces for respective display regions DM1 to DM16.

To this end, the average data generating unit 511 includes a screen divider 503, a maximum value selector 504, and an average value calculator 505.

The screen divider 503 analyzes R/G/B data supplied from the system 400 via the synchronizing unit 501, and divides the display area 777 into the n display regions DM1 to DM16. For example, the screen divider 503 may divide the display area 777 into 16 display regions DM1 to DM16, as shown in FIG. 3.

The maximum value selector 504 selects data having a maximum value from among R data supplied to the red pixel R, G data supplied to the green pixel G, and B data supplied to the blue pixel B in each unit pixel PX of an arbitrary display region. That is, one display region includes a plurality of unit pixels PX, and each unit pixel PX includes one red pixel R, one green pixel G, and one blue pixel B, as shown in FIG. 3. The maximum value selector 504 selects one pixel receiving data having a maximum value from among three pixels R, G, and B of each unit pixel PX, and extracts the data value of the selected pixel from the unit pixel PX.

The average value calculator 505 calculates an average value from the sum of the data values extracted from the maximum value selector 504 for each display region, to calculate average data for the display region.

The average data generating unit 511 calculates and generates average data for all display regions DM1 to DM16 in the above-described manner. Thus, the number of average data values provided from the average data generating unit 511 is equal to the number of the display regions.

The dimming signal generating unit 506 receives each average data from the average value calculator 505, and generates a dimming signal for the average data. That is, the dimming signal generating unit 506 generates a dimming signal having a duty ratio corresponding to the value of each average data. The number of dimming signals output from the dimming signal generating unit 506 is equal to the number of display regions.

The filtering unit 507 re-adjusts the duty ratios of dimming signals output corresponding to the current frame to be displayed in the current frame period from the dimming signal generating unit 506, based on the value of data of the current frame and the values of data of several previous frames displayed in the corresponding previous frame periods. To this end, the filtering unit 507 again sets the average data value of each display region in the current frame to the average value obtained from the sum of the average data value of the display region in the current frame and the average data value of the display region in each previous frame corresponding to the current frame. Thus, the duty ratio of each dimming signal to be generated from the dimming signal generating unit 506 is again set, based on the corresponding re-set average data value.

The sequential dimming signal output unit 508 sequentially outputs the dimming signals from the filtering unit 507 to the light source driving unit 509.

The light source driving unit 509 generates pulsewidth modulation signals, based on the dimming signals from the sequential dimming signal output unit 508. The pulsewidth modulation signals are supplied to the light sources r, g, and b, to cause the light sources r, g, and b to emit light.

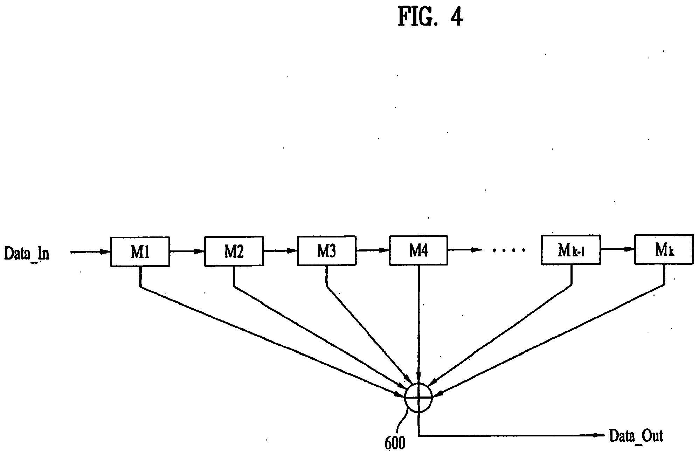

The operation of the filtering unit 507 will be described in more detail with reference to FIG. 4.

FIG. 4 is a block diagram for explaining the configuration and operation of the filtering unit 507.

The filtering unit 507 is a moving average filter, and includes a plurality of line memories M1 to Mk, and a summing averager 600. Each of the line memories M1 to Mk shifts data previously stored therein to the memory arranged adjacent to the right side thereof every time data is input thereto. In FIG. 4, k line memories M1 to Mk are shown. The data of the current frame is supplied to the first line memory M1, which is arranged at a leftmost position among the line memories M1 to Mk. In the second to k-th line memories M2 to Mk, data values of previous frames are sequentially stored, respectively. The data of the current frame and the data of the previous frames are average data values.

The data value of the current frame stored in the first line memory M1 and the data values of the previous frames respectively stored in the second to k-th line memories M2 to Mk are summed and then averaged by the summing averager 600. The averaged data value, namely, modulated data, is used as a source for a dimming signal to be used for the driving of the light sources r, g, and b during the current frame period. That is, the dimming signal has a duty ratio based on the averaged data value. Thus, it is possible to eliminate a flicker phenomenon, which may occur when the data value difference between neighboring frames is severe, or when the data of the current frame is distorted due to noise, etc. such that it has an increased value.

The filtering unit 507 is provided to correspond to the number of display regions. For example, where the number of display regions is 16, the number of filtering units 507 is 16. When it is assumed that these filtering units 507 are referred to as first to 16-th filtering units 507, the first filtering unit 507 calculates an average value from the sum of respective data values during the first to k-th frame periods for the first display region DM1. The second filtering unit 507 calculates an average value from the sum of respective data values during the first to k-th frame periods for the second display region DM2. In the same manner, the remaining filtering units 507 calculate average values for the corresponding display regions, respectively. For example, the 16-th filtering unit 507 calculates an average value from the sum of respective data values during the first to k-th frame periods for the 16-th display region DM16.

Meanwhile, the display area 777 may have a single display region. In this case, only one filtering unit 507 is needed.

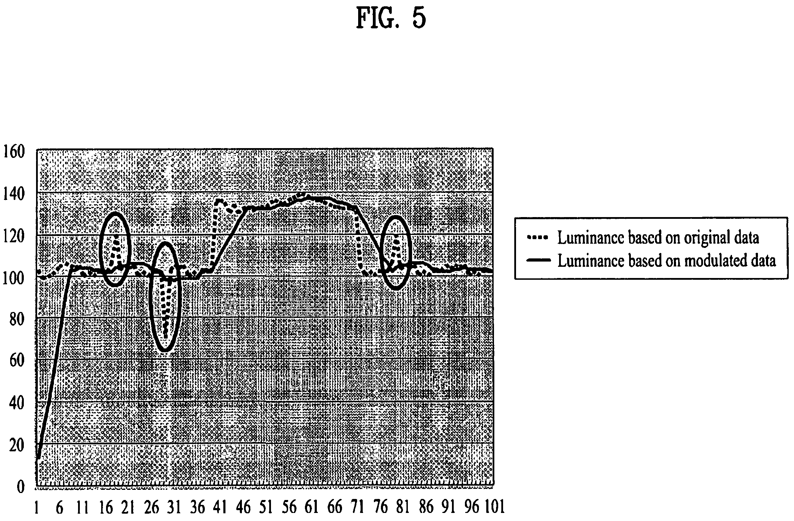

FIG. 5 is a graph for explaining the results of comparison between the luminance of light generated based on the original data and the luminance of light generated based on the modulated data. As shown in FIG. 5, the light generated based on the original data may abruptly vary at one moment in a specific frame period. However, the light generated based on the modulated data exhibits a luminance almost equal to those in previous frame periods. Accordingly, the above-described flicker phenomenon may be eliminated.

Meanwhile, where the backlight driving circuit 302 having the configuration shown in FIG. 2 is used, the filtering units 507 operate for every frame, irrespective of the characteristics of data. For this reason, the response rate of the display device may be decreased when an abrupt data variation occurs between frames. In this case, it is difficult for the display device to respond in real time to the abrupt data variation between frames.

Hereinafter, a backlight driving unit according to an embodiment of the present invention, which can solve the above-described problem, will be described in detail.

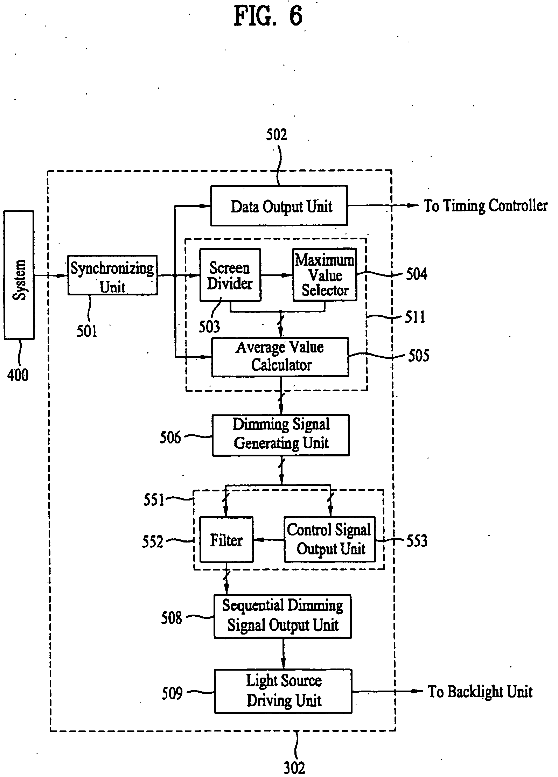

FIG. 6 is a block diagram illustrating a backlight driving circuit 302 according to the embodiment of the present invention.

As shown in FIG. 6, the backlight driving circuit 302 according the embodiment of the present invention includes a synchronizer 501, a data output unit 502, an average data generating unit 511, a dimming signal generating unit 506, a selective filtering unit 551, a sequential dimming signal output unit 508, and a light source driving unit 509.

The backlight driving circuit 302 according to the embodiment of the present invention further includes a control signal output unit 553 which is installed in the selective filtering unit 551. Since the synchronizer 501, data output unit 502, average data generating unit 511, dimming signal generating unit 506, sequential dimming signal output unit 508, and light source driving unit 509 are identical to those of the comparative example, no description thereof will be given.

The selective filtering unit 551 receives the dimming signals of the previous and current frames, performs an average data comparison for each display region in every frame, and calculates an average data difference for each display region. The average data difference is compared with a predetermined reference grayscale value. Based on the results of the comparison for all display regions, the selective filtering unit 551 determines the number of display regions each having an average data difference exceeding the predetermined reference grayscale value. Based on the results of the determination, the selective filtering unit 551 again sets the average data value of each display region in the current frame to the average value obtained from the sum of the average data value of the display region in the current frame and the average data value of the display region in each previous frame corresponding to the current frame. Thus, the duty ratio of each dimming signal to be generated from the dimming signal generating unit 506 is again set, based on the corresponding re-set average data value. In this case, a modulated dimming signal for each display region is output. Otherwise, the selective filtering unit 551 outputs the dimming signals from the dimming signal generating unit 506 without a modulation.

To this end, the selective filtering unit 551 includes a control signal output unit 553 and a filter 552.

The control signal output unit 553 receives the dimming signals of the previous and current frames, performs an average data comparison for each display region in every frame, and calculates an average data difference for each display region. The control signal output unit 553 then compares the average data difference with the predetermined reference grayscale value. Based on the results of the comparison for all display regions, the control signal output unit 553 determines the number of display regions each having an average difference exceeding the predetermined reference grayscale value. Based on the results of the determination, the control signal output unit 553 outputs a first control signal or a second control signal.

In detail, the control signal output unit 553 outputs the first control signal when the determined number is larger than a predetermined threshold value. On the other hand, the control signal output unit 553 outputs the second control signal when the determined number is equal to or smaller than the predetermined threshold value.

The filter 552 receives the first and second control signals from the control signal output unit 553, and receives the dimming signals from the dimming signal generating unit 506. When the first control signal is supplied from the control signal output unit 553, the filter 552 modulates the average data value of each display region in the current frame into the average value obtained from the sum of the average data value of the display region in the current frame and the average data values of the display region in several previous frames corresponding to the current frame. Thus, the duty ratio of each dimming signal to be generated from the dimming signal generating unit 506 is again set, based on the corresponding modulated average data value. On the other hand, when the second control signal is supplied from the control signal output unit 553, the filter 552 outputs the dimming signals from the dimming signal generating unit 506 without a modulation.

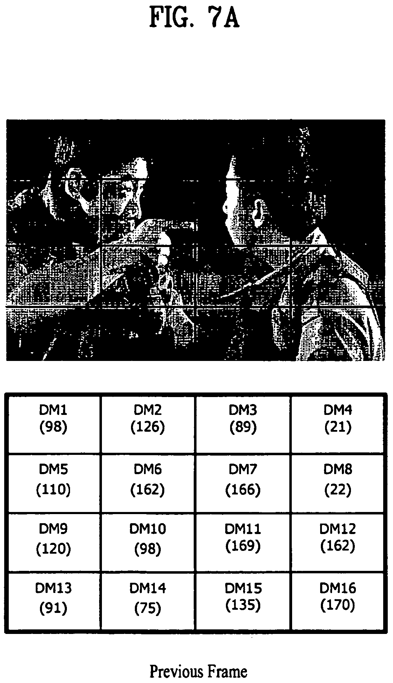

The operation of the selective filtering unit 551 will be described in more detail with reference to FIGs. 7A to 10.

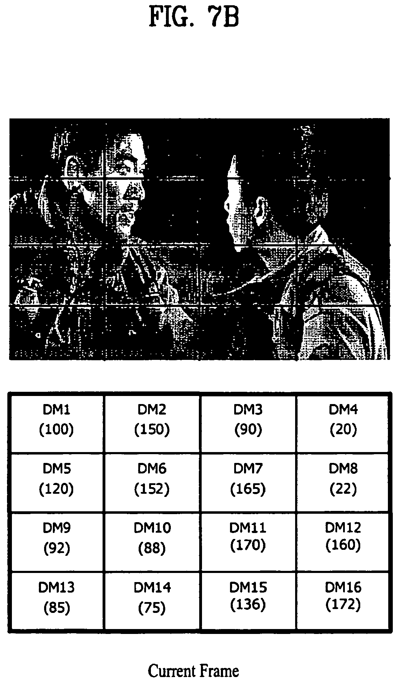

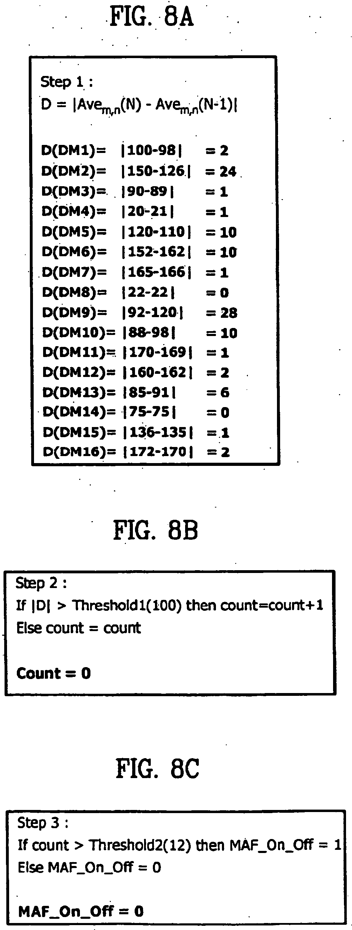

FIGs. 7A and 7B are views illustrating a variation in the image displayed on the display area 777 when the data variation between neighboring frames is small. FIGs. 8A to 8C are flow charts for explaining an operation sequence of the selective filtering unit 507 for an image, for example, images shown in FIGs. 7A and 7B.

As shown in FIGs. 7A and 7B, the screen divider 503 first divides the display area 777 into a plurality of display regions DM1 to DM16. The screen divider 503 then re-arranges R data, G data, and B data of one frame supplied from the system 400 via the synchronizing unit 501 for the divided display regions DM1 to DM16. Thereafter, the screen divider 503 supplies information about the display regions DM1 to DM16, and information about the data positioned in each of the display regions DM1 to DM16 to the maximum value selector 504 and average value calculator 505.

The maximum value selector 504 extracts data having a maximum value from each unit pixel PX in each of the display regions DM1 to DM16. That is, one display region includes a plurality of unit pixels PX. Accordingly, the maximum value selector 504 selects data having a maximum value from among data supplied to three pixels R, G, and B of each unit pixel PX. The maximum value selector 504 then supplies the selected data, which has the maximum value, to the average value calculator 505.

The average value calculator 505 sums the selected maximum data values for all unit pixels in each of the display regions DM1 to DM16, and divides the summed value by the number of display regions DM1 to DM16, thereby generating average data for the display region.

In FIGs. 7A and 7B, respective average data values of the display regions DM1 to DM16 are indicated within parenthesises. At a higher average data value, a brighter image is displayed. FIG. 7A is a view illustrating average data in each display region for a previous frame image. FIG. 7B is a view illustrating average data in each display region for a current frame image.

The average data of each display region is converted into a dimming signal while passing through the dimming signal generating unit 506. The dimming signal is supplied to the filter 552 and control signal output unit 553.

The control signal output unit 553 compares the dimming signals current supplied thereto for the current frame with the dimming signals previously stored therein for the previous frame, thereby determining how abruptly the image of the current frame has varied from the image of the previous frame. "Ave_{m,n}(N)" means average data in an arbitrary display region in an N-th frame, namely, the current frame, and "Ave_{m,n}(N-1)" means average data in an arbitrary display region in an N-1-th frame, namely, the previous frame.

To this end, as shown in FIG. 8A, the control signal output unit 553 derives an average data value difference D between the previous and current frames for each display region. This value is an absolute value, and represents how much the image of each display region has varied in every frame.

Thereafter, as shown in FIG. 8B, the derived average data value difference D is compared with a predetermined reference grayscale value Threshold1.

The reference grayscale value may be one of grayscale values for data, or may be any other values. The reference grayscale value may be varied in accordance with the setting of the system 400. In an example according to the present invention, the reference grayscale value was set to "100".

As shown in FIG. 8B, the control signal output unit 553 compares, one by one, the difference values D of the display regions with the reference grayscale value. That is, the control signal output unit 553 compares 16 difference values D with the reference grayscale value, respectively. In accordance with the results of the comparison, the difference value D of an arbitrary display region may be smaller than the reference grayscale value, or may be larger than or equal to the reference grayscale value.

The control signal output unit 553 counts the number of display regions each exhibiting a difference value D larger than the reference grayscale value, and then compares the counted number with a predetermined threshold value Threshold2.

The threshold value Threshold2 may be any values. This value may be freely varied in accordance with the setting of the system 400. In an example according to the present invention, this threshold value Threshold2 was set to "12".

The counted number may be larger or smaller than, or equal to the threshold value Threshold2. When the counted number is smaller than or equal to the threshold value threshold2, the control signal output unit 553 outputs the first control signal to operate the filter 552. On the other hand, when the counted number is larger than the threshold value threshold2, the control signal output unit 553 outputs the second control signal to turn off the filter 552.

Referring to FIG. 8A, it can be seen that all difference values D of the display regions DM1 to DM16 are smaller than the reference grayscale value. In this case, accordingly, it can be seen that the counted number count is "0", as shown in FIG. 8B. This means that the number of display regions each having a difference value larger than "100" does not exceed "12" as shown in Fig. 7A and 7B. In FIG. 8C, "MAF_ON_OFF = 0" means that the filter 552 is not in operation in accordance with the second control signal.

Based on the above-described determination, the control signal output unit 553 outputs the second control signal, which is supplied to the filter 552.

In response to the second control signal, the filter 552 outputs without again setting the dimming signals the 16 dimming signals supplied thereto. That is, the filter 552 sums the average data of one display region in the current frame and the average data of the one display region in several previous frames corresponding to the current frame, and calculates an average value from the sum, to derive modulated average data. In this manner, the filter 507 derives modulated average data values for 16 display regions DM1 to DM16, respectively. Based on the modulated average data values, the filter 507 then again sets respective duty ratios of the 16 dimming signals supplied thereto. In other words, the filter 552 outputs the dimming signals of the current frame after again setting the duty ratios of the dimming signals.

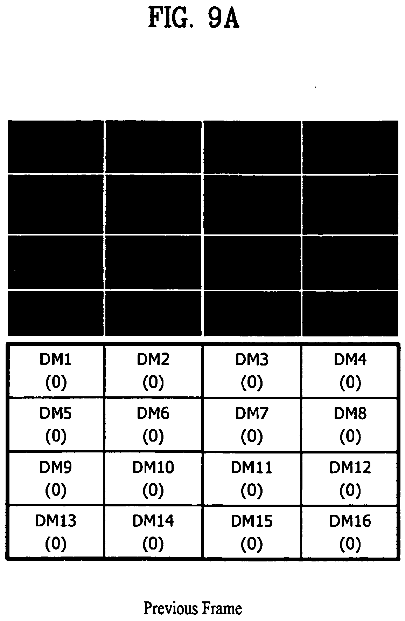

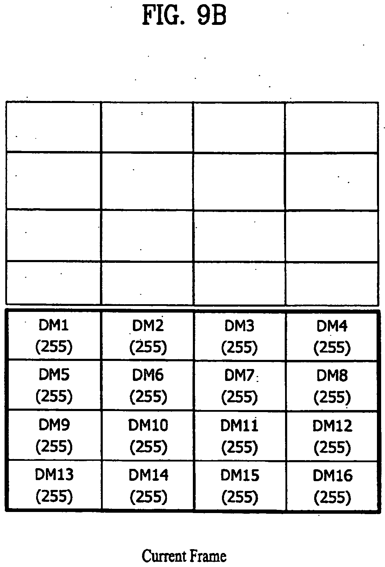

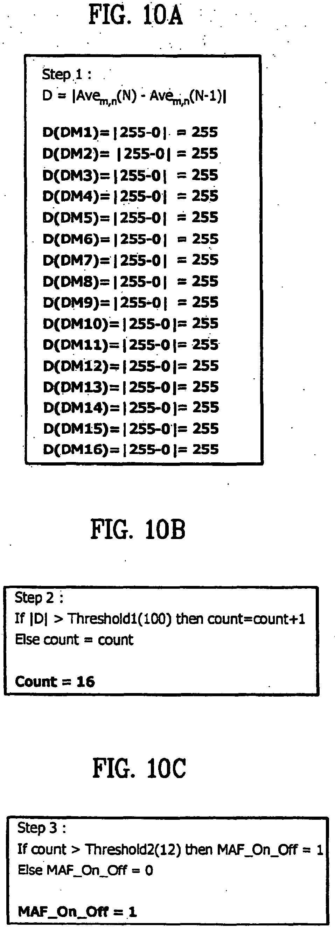

FIGs. 9A and 9B are views illustrating a variation in the image displayed on the display area 777 when the data variation between neighboring frames is large. FIGs. 10A to 10C are flow charts for explaining an operation sequence of the selective filtering unit 507 for an image, for example, images shown in FIGs. 9A and 9B.

Referring to FIG. 9A, it can be seen that the difference values of all display regions are larger than the reference grayscale value. FIGs. 9A and 9B illustrate an example exhibiting a variation from a black image to a white image. In this case, accordingly, it can be seen that the counted number count is "16", as shown in FIG. 9B. Thus, it can be seen that, in the images of FIGs. 9A and 9B, the number of display regions each having a difference value larger than "100" exceeds "12".

Based on the above-described determination, the control signal output unit 553 outputs the first control signal, which is supplied to the filter 552.

In response to the first control signal, the filter 552 again sets the duty ratios of the 16 dimming signals supplied thereto. In FIG. 9C, "MAF_ON_OFF = 1" means that the filter 552 is turned on in accordance with the first control signal.

As described above, the backlight driving unit according to the second embodiment of the present invention performs an image comparison for every frame, to determine the characteristics of an image of the frame, and controls whether the filtering unit should operate, based on the result of the image comparison. Accordingly, it is possible to prevent a flicker phenomenon, and to obtain a high response rate even in an abrupt image variation.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

That is, the filter 552 sums the average data of one display region in the current frame and the average data of the one display region in several previous frames corresponding to the current frame, and calculates an average value from the sum, to derive modulated average data. In this manner, the filter 507 derives modulated average data values for 16 display regions DM1 to DM16, respectively. Based on the modulated average data values, the filter 507 then again sets respective duty ratios of the 16 dimming signals supplied thereto. In other words, the filter 552 outputs the dimming signals of the current frame after again setting the duty ratios of the dimming signals.

## Claims

1. A backlight driving apparatus comprising:
- an average data generating unit (511) for dividing a display area (777) of a display panel (10), the display panel (10) comprises a plurality of pixels (PX) including a plurality of red pixels (R) for displaying a red image, a plurality of green pixels (G) for displaying a green image, and a plurality of blue pixels (B) for displaying a blue image; and the display area (777), on which an image is displayed, wherein each unit pixel for displaying a unit image comprises three different-color pixels consisting of one red pixel (R), one green pixel (G), and one blue pixel (B);
wherein the average data generating unit (511) comprises:
a display area divider (503) for analyzing red (R) data, green (G) data, and blue (B) data supplied from a system (400), and dividing the display area (777) into n display regions (DM1, ..., DM16), wherein "n" is a natural number of 2 or more, based on the results of the analysis;
a maximum value selector (504) for selecting data having a maximum value from among the R data supplied to the red pixel, the G data supplied to the green pixel and B data supplied to the blue pixel of each unit pixel of a display region (DM1, ..., DM16);
an average value calculator (505) for calculating an average value from a sum of the data values of all unit pixels (PX) selected by the maximum value selector (504) for each display region (DM1, ..., DM16), thereby generating n average data values for the n display regions (DM1, ..., DM16);
- a dimming signal generating unit (506) receiving the n average data values for the n display regions (DM1, .... DM16) for generating n dimming signals each having a duty ratio corresponding to the average data value of the corresponding display region;
- a selective filtering unit (551) comprising a control signal output unit (553) and a filter (552), the control signal output unit (553) is adapted to receive the n dimming signals of the current frames, and to perform an average data comparison for each display region (OM1, ..., DM16) in every frame between average data values currently supplied for the current frame and average data values previously stored for the previous frame, and calculates an average data difference (D) for each display region, wherein the average data difference (D) is compared with a predetermined reference grayscale value, based on the results of the comparison for all display regions (DM1, ..., DM16), the control signal output unit (553) is adapted to determine the number of display regions having an average data difference (D) exceeding the predetermined reference grayscale value, wherein based on the results of the determination, the control signal output unit (553) is adapted to output a first control signal or a second control signal,
wherein the first control signal is outputted when the number is larger than a predetermined threshold value and the second control signal is outputted when the number is equal to or smaller than the predetermined threshold value,
wherein the filter (552) is adapted to receive the first or the second control signal and receives the n dimming signals from the dimming signal generating unit (506),
wherein when the first control signal is supplied from the control signal output unit (553), the filter (552) is adapted to modulate the average data value of each display region in the current frame into the average value obtained from the sum of the average data value of the display region in the current frame and the average data values of the display region in several previous frames, to thereby again set the duty ratios of the dimming signals supplied from the dimming signal generating unit (506) based on the modulated average data value,
wherein when the second control signal is supplied from the control signal output unit (553), the filter (552) is adapted to output the dimming signals from the dimming signal generating unit 506 without a modulation;
- a sequential dimming signal output unit (508) for sequentially outputting and supplying the n dimming signals from the selective filtering unit (507) to a light source driving unit (509) of the backlight driving apparatus for driving light sources (r, g, b) of a backlight unit (200) to irradiate light to the display panel (10);
wherein the light source driving unit (509) is adapted to generate pulse width modulation signals based on the n dimming signals and to supply the pulse width modulation signals to the light sources (r, g, b) to cause the light sources (r, g, b) emit light.

2. A method for driving a backlight driving circuit, comprising:
A) dividing a display area of a display panel (10) comprising a plurality of pixels (PX), and the display area on which an image is displayed into n display regions (DM1, ..., DM16), wherein "n" is a natural number of 2 or more, and calculating an average value of data supplied to each of the display regions (DM1, ..., DM 16), thereby generating n average data values;
B) generating n dimming signals each having a duty ratio corresponding to the average data value of the corresponding display region;
C) comparing the n average data values currently supplied for a current frame with the average data values previously stored for a previous frame, to determine how abruptly an image of the current frame has varied from an image of the previous frame, and outputting the n dimming signals for the current frame after modulating duty ratios of the dimming signals for the current frame, or outputting the n dimming signals for the current frame without modulating the duty ratios;
D) sequentially outputting the n dimming signals, and supplying the n dimming signals to a light source driving unit (509) for driving light sources (r, g, b) of a backlight unit (200) which includes a plurality of light sources (r, g, b) to irradiate light to the display panel (10), wherein the light source driving unit (509) generates pulse width modulation signals based on the n dimming signals,
wherein the step A) comprises generating the n average data values for respective display regions (DM1, ..., DM16) by calculating an average data value supplied to pixels (PX) in each display region, wherein the pixels (PX) comprise a plurality of red pixels (R) for displaying a red image, a plurality of green pixels (G) for displaying a green image, and a plurality of blue pixels (B) for displaying a blue image, wherein each unit pixel for displaying a unit image comprises three different-color pixels (PX) consisting of one red pixel, one green pixel, and one blue pixel;
wherein the step A) further comprises
1) analyzing red (R) data, green (G) data, and blue (B) data supplied from a system (400), and dividing the display area (777) into a plurality of display regions (DM1, ..., DM16), based on the results of the analysis;
2) selecting data having a maximum value from among the R data supplied to the red pixel of each unit pixel in a display region, the G data supplied to the green pixel of the unit pixel, and B data supplied to the blue pixel of the unit pixel;
3) calculating an average value from a sum of the data values of all unit pixels (PX) selected by the maximum value selector (504) for the display region, thereby obtaining average data value for the display region;
wherein the step C) comprises performing an average data comparison for each display region in every frame, calculating an average data difference (D) for each display region, based on the result of the average data comparison, comparing the calculated difference with a predetermined reference grayscale value, determining the number of display regions (DM1, ..., DM16) each having an average data difference exceeding the predetermined reference grayscale value, based on the result of the comparison, modulating the average data value of each display region in the current frame to average value obtained from a sum of the average data value of the display region in the current frame and the average data values of the display region in several previous frames, based on the result of the determination, to again set the duty ratios of the dimming signals supplied at the step B), and outputting the modulated dimming signals or outputting the dimming signals supplied at the step B), without a modulation;
wherein the step C) comprises:
performing an average data comparison for each display region by comparing average data values currently supplied for the current frame with average data values previously stored for the previous frame;
calculating an average data difference for each display region based on the result of the average data comparison, wherein the average data difference is calculated by subtracting the average data value of the previous frame from the average data value of the current frame;
comparing the calculated average data difference with a predetermined reference grayscale value;
determining the number of display regions (DM1, ..., DM16) each having an average data difference exceeding the predetermined reference grayscale value, based on the result of the comparison;
outputting a first control signal or a second control signal, based on the result of the determination, wherein the first control signal is outputted when the determined number is larger than a predetermined threshold value and wherein the second control signal is outputted when the determined number is smaller than or equal to the predetermined threshold value; and;
modulating the average data value of each display region in the current frame to an average value obtained from a sum of the average data value of the display region in the current frame and the average data values of the display region in several previous frames, when the first control signal is output, to again set the duty ratios of the dimming signals supplied at the step B) based on the modulated average data value, while outputting the dimming signals supplied at the step B), without a modulation, when the second control signal is output.

## Patentansprüche

1. Hintergrundbeleuchtungsansteuervorrichtung, die umfasst:
- eine Durchschnittsdatenerzeugungseinheit (511) zum Einteilen einer Anzeigefläche (777) eines Anzeigefeldes (10), wobei das Anzeigefeld (10) mehrere Pixel (PX), die mehrere rote Pixel (R) zum Anzeigen eines roten Bildes, mehrere grüne Pixel (G) zum Anzeigen eines grünen Bildes und mehrere blaue Pixel (B) zum Anzeigen eines blauen Bildes umfassen; und die Anzeigefläche (777), auf der ein Bild angezeigt wird, umfasst, wobei jedes Einheitspixel zum Anzeigen einer Bildeinheit drei verschiedenfarbige Pixel, die aus einem roten Pixel (R), einem grünen Pixel (G) und einem blauen Pixel (B) bestehen, umfasst;
wobei die Durchschnittsdatenerzeugungseinheit (511) umfasst:
einen Anzeigeflächenteiler (503) zum Analysieren von Rot-Daten (R-Daten), Grün-Daten (G-Daten) und Blau-Daten (B-Daten), die aus einem System (400) geliefert werden, und zum Einteilen der Anzeigefläche (777) in n Anzeigebereiche (DM1, ..., DM16), wobei "n" eine natürliche Zahl größer oder gleich 2 ist, basierend auf den Ergebnissen der Analyse;
einen Maximalwertselektor (504) zum Auswählen von Daten, die einen Maximalwert aufweisen, aus den R-Daten, die an den roten Pixel geliefert werden, den G-Daten, die an den grünen Pixel geliefert werden, und den B-Daten, die an den blauen Pixel geliefert werden, jedes Einheitspixels eines Anzeigebereichs (DM1, ..., DM16);
einen Durchschnittswert-Rechner (505) zum Berechnen eines Durchschnittswerts aus einer Summe der Datenwerte aller Einheitspixel (PX), die durch den Maximalwertselektor (504) ausgewählt werden, für jeden Anzeigebereich (DM1, ..., DM16), wobei n Durchschnittsdatenwerte für die n Anzeigebereiche (DM1, ..., DM16) erzeugt werden;
- eine Dimmsignalerzeugungseinheit (506), die die n Durchschnittsdatenwerte für die n Anzeigebereiche (DM1, ..., DM16) zum Erzeugen von n Dimmsignalen, die jeweils einen Tastgrad aufweisen, der dem Durchschnittsdatenwert des entsprechenden Anzeigebereichs entspricht, empfängt;
- eine selektive Filtereinheit (551), die eine Steuersignalausgabeeinheit (553) und ein Filter (552) umfasst, wobei die Steuersignalausgabeeinheit (553) dazu ausgelegt ist, die n Dimmsignale der aktuellen Einzelbilder zu empfangen und einen Durchschnittsdatenvergleich für jeden Anzeigebereich (DM1, ..., DM16) in jedem Einzelbild zwischen Durchschnittsdatenwerten, die aktuell für das aktuelle Einzelbild geliefert werden, und Durchschnittsdatenwerten, die vorher für das vorherige Einzelbild gespeichert worden sind, durchzuführen, und eine Durchschnittsdatendifferenz (D) für jeden Anzeigebereich berechnet, wobei die Durchschnittsdatendifferenz (D) mit einem vorbestimmten Referenzgrauwert verglichen wird, der auf den Ergebnissen des Vergleichs für alle Anzeigebereiche (DM1, ..., DM16) basiert, wobei die Signalausgabesteuereinheit (553) dazu ausgelegt ist, die Anzahl der Anzeigebereiche zu bestimmen, in denen eine Durchschnittsdatendifferenz (D) den vorbestimmten Referenzgrauwert überschreitet, wobei die Steuersignalausgabeeinheit (553) dazu ausgelegt ist, basierend auf den Ergebnissen der Bestimmung ein erstes Steuersignal oder ein zweites Steuersignal auszugeben,
wobei das erste Steuersignal ausgegeben wird, wenn die Anzahl größer als ein vorbestimmter Schwellenwert ist, und das zweite Steuersignal ausgegeben wird, wenn die Anzahl kleiner oder gleich dem vorbestimmten Schwellenwert ist,
wobei das Filter (552) dazu ausgelegt ist, das erste oder das zweite Steuersignal zu empfangen, und die n Dimmsignale aus der Dimmsignalerzeugungseinheit (506) empfängt,
wobei dann, wenn das erste Steuersignal aus der Steuersignalausgabeeinheit (553) geliefert wird, das Filter (552) dazu ausgelegt ist, den Durchschnittsdatenwert von jedem Anzeigebereich in dem aktuellen Einzelbild in einen Durchschnittswert, der aus der Summe des Durchschnittsdatenwerts des Anzeigebereichs in dem aktuellen Einzelbild und den Durchschnittsdatenwerten des Anzeigebereichs in mehreren vorherigen Einzelbildern erhalten wird, abzuwandeln, um dadurch die Tastverhältnisse der Dimmsignale, die aus der Dimmsignalerzeugungseinheit (506) geliefert werden, basierend auf dem abgewandelten Durchschnittsdatenwert erneut festzulegen,
wobei dann, wenn das zweite Steuersignal von der Steuersignalausgabeeinheit (553) geliefert wird, das Filter (552) dazu ausgelegt ist, die Dimmsignale aus der Dimmsignalerzeugungseinheit 506 ohne eine Abwandlung auszugeben;
- eine sequentielle Dimmsignalausgabeeinheit (508) zum sequentiellen Ausgeben und Liefern der n Dimmsignale aus der selektiven Filtereinheit (507) an eine Lichtquellenansteuereinheit (509) der Hintergrundbeleuchtungsansteuervorrichtung zum Ansteuern von Lichtquellen (r, g, b) einer Hintergrundbeleuchtungseinheit (200), um Licht auf das Anzeigefeld (10) zu strahlen;
wobei die Lichtquellenansteuereinheit (509) dazu ausgelegt ist, Pulsbreitenmodulationssignale basierend auf den n Dimmsignalen zu erzeugen und die Pulsbreitenmodulationssignale an die Lichtquellen (r, g, b) zu liefern, um zu veranlassen, dass die Lichtquellen (r, g, b) Licht emittieren.

2. Verfahren zum Ansteuern einer Hintergrundbeleuchtungsansteuerschaltung, das umfasst:
A) Einteilen einer Anzeigefläche eines Anzeigefeldes (10), das mehrere Pixel (PX) und die Anzeigefläche, auf der ein Bild angezeigt wird, umfasst, in n Anzeigebereiche (DM1, ..., DM16), wobei "n" eine natürliche Zahl größer oder gleich 2 ist, und Berechnen eines Durchschnittswerts von Daten, die an jeden der Anzeigebereiche (DM1, ..., DM16) geliefert werden, wodurch n Durchschnittsdatenwerte erzeugt werden;
B) Erzeugen von n Dimmsignalen, die jeweils einen Tastgrad aufweisen, der dem Durchschnittsdatenwert des entsprechenden Anzeigebereichs entspricht;
C) Vergleichen der n Durchschnittsdatenwerte, die aktuell für ein aktuelles Einzelbild geliefert werden, mit den Durchschnittsdatenwerten, die vorher für ein vorheriges Einzelbild gespeichert worden sind, um zu bestimmen, wie abrupt sich ein Bild des aktuellen Einzelbilds gegenüber einem Bild des vorherigen Einzelbilds verändert hat, und Ausgeben der n Dimmsignale für das aktuelle Einzelbild nach Abwandeln von Tastgraden der Dimmsignale für das aktuelle Einzelbild oder Ausgeben der n Dimmsignale für das aktuelle Einzelbild ohne Abwandeln der Tastgrade;
D) sequentielles Ausgeben der n Dimmsignale und Liefern der n Dimmsignale an eine Lichtquellenansteuereinheit (509) zum Ansteuern von Lichtquellen (r, g, b) einer Hintergrundbeleuchtungseinheit (200), die mehrere Lichtquellen (r, g, b) umfasst, um das Anzeigefeld (10) zu bestrahlen, wobei die Lichtquellenansteuereinheit (509) Pulsbreitenmodulationssignale basierend auf den n Dimmsignalen erzeugt,
wobei der Schritt A) umfasst: Erzeugen der n Durchschnittsdatenwerte für jeweilige Anzeigebereiche (DM1, ..., DM16) durch Berechnen eines Durchschnittsdatenwerts, der an Pixel (PX) in jedem Anzeigebereich geliefert wird, wobei die Pixel (PX) mehrere rote Pixel (R) zum Anzeigen eines roten Bildes, mehrere grüne Pixel (G) zum Anzeigen eines grünen Bildes und mehrere blaue Pixel (B) zum Anzeigen eines blauen Bildes umfassen; wobei jedes Einheitspixel zum Anzeigen einer Bildeinheit drei verschiedenfarbige Pixel, die aus einem roten Pixel (R), einem grünen Pixel (G) und einem blauen Pixel (B) bestehen, umfasst;
wobei der Schritt A) ferner umfasst:
1) Analysieren von Rot-Daten (R-Daten), Grün-Daten (G-Daten) und Blau-Daten (B-Daten), die aus einem System (400) geliefert werden, und Einteilen der Anzeigefläche (777) in mehrere Anzeigebereiche (DM1, ..., DM16) basierend auf den Ergebnissen der Analyse;
2) Auswählen von Daten, die einen Maximalwert aufweisen, aus den R-Daten, die an den roten Pixel geliefert werden, den G-Daten, die an den grünen Pixel geliefert werden, und den B-Daten, die an den blauen Pixel geliefert werden, des Einheitspixels;
3) Berechnen eines Durchschnittswerts aus einer Summe der Datenwerte aller Einheitspixel (PX), die durch den Maximalwertselektor (504) für den Anzeigebereich ausgewählt werden, wodurch ein Durchschnittsdatenwert für den Anzeigebereich erhalten wird;
wobei der Schritt C) umfasst: Durchführen eines Durchschnittsdatenvergleichs für jeden Anzeigebereich in jedem Einzelbild, Berechnen einer Durchschnittsdatendifferenz (D) für jeden Anzeigebereich basierend auf dem Ergebnis des Durchschnittsdatenvergleichs, Vergleichen der berechneten Differenz mit einem vorbestimmten Referenzgrauwert, Bestimmen der Anzahl von Anzeigebereichen (DM1, ..., DM16), die jeweils eine Durchschnittsdatendifferenz aufweisen, die den vorbestimmten Referenzgrauwert überschreitet, Abwandeln des Durchschnittsdatenwerts von jedem Anzeigebereich in dem aktuellen Einzelbild in einen Durchschnittswert, der aus der Summe des Durchschnittsdatenwerts des Anzeigebereichs in dem aktuellen Einzelbild und den Durchschnittsdatenwerten des Anzeigebereichs in mehreren vorherigen Einzelbildern erhalten wird, basierend auf dem Ergebnis des Vergleichs, erneutes Festlegen der Tastgrade der Dimmsignale, die in dem Schritt B) geliefert werden, und Ausgeben der abgewandelten Dimmsignale oder Ausgeben der Dimmsignale, die in dem Schritt B) geliefert werden, ohne eine Abwandlung;
wobei der Schritt C) umfasst:
Durchführen eines Durchschnittsdatenvergleichs für jeden Anzeigebereich durch Vergleichen von Durchschnittsdatenwerten, die aktuell für das aktuelle Einzelbild geliefert werden, mit Durchschnittsdatenwerten, die vorher für das vorherige Einzelbild gespeichert worden sind;
Berechnen einer Durchschnittsdatendifferenz für jeden Anzeigebereich basierend auf dem Ergebnis des Durchschnittsdatenvergleichs, wobei die Durchschnittsdatendifferenz durch Subtrahieren des Durchschnittsdatenwerts des vorherigen Einzelbilds von dem Durchschnittsdatenwerts des aktuellen Einzelbilds berechnet wird;
Vergleichen der Durchschnittsdatendifferenz mit einem vorbestimmten Referenzgrauwert;
Bestimmen der Anzahl von Anzeigebereichen (DM1, ..., DM16), die jeweils eine Durchschnittsdatendifferenz aufweisen, die den vorbestimmten Referenzgrauwert überschreitet, basierend auf dem Ergebnis des Vergleichs;
Ausgeben eines ersten Steuersignals oder eines zweiten Steuersignals basierend auf dem Ergebnis der Bestimmung, wobei das erste Steuersignal ausgegeben wird, wenn die bestimmte Anzahl größer als ein vorbestimmter Schwellenwert ist, und das zweite Steuersignal ausgegeben wird, wenn die bestimmte Anzahl kleiner oder gleich dem vorbestimmten Schwellenwert ist; und;
Abwandeln des Durchschnittsdatenwerts von jedem Anzeigebereich in dem aktuellen Einzelbild in einen Durchschnittswert, der aus der Summe des Durchschnittsdatenwerts des Anzeigebereichs in dem aktuellen Einzelbild und den Durchschnittsdatenwerten des Anzeigebereichs in mehreren vorherigen Einzelbildern erhalten wird, wenn das erste Steuersignal ausgegeben wird, um die Tastgrade der Dimmsignale, die in dem Schritt B) geliefert werden, basierend auf dem abgewandelten Durchschnittsdatenwert erneut festzulegen, und Ausgeben der Dimmsignale, die in dem Schritt B) geliefert werden, ohne eine Abwandlung, wenn das zweite Steuersignal ausgegeben wird.

## Revendications

1. Appareil de commande de rétroéclairage comprenant :
- une unité de génération de données moyennes (511) pour diviser une zone d'affichage (777) d'un panneau d'affichage (10), le panneau d'affichage (10) comprenant une pluralité de pixels (PX) comprenant une pluralité de pixels rouges (R) pour afficher une image rouge, une pluralité de pixels verts (G) pour afficher une image verte, et une pluralité de pixels bleus (B) pour afficher une image bleue ; et la zone d'affichage (777) sur laquelle une image est affichée, dans lequel chaque pixel unitaire pour afficher une image unitaire comprend trois pixels de couleurs différentes se composant d'un pixel rouge (R), d'un pixel vert (G) et d'un pixel bleu (B) ;
dans lequel l'unité de génération de données moyennes (511) comprend :
un diviseur de zone d'affichage (503) pour analyser des données rouges (R), des données vertes (G), et de données bleues (B) fournies à partir d'un système (400) et diviser la zone d'affichage (777) en n régions d'affichage (DM1, ..., DM16), dans lequel « n » est un nombre naturel supérieur ou égal à 2, sur la base des résultats de l'analyse ;
un sélecteur de valeur maximale (504) pour sélectionner des données ayant une valeur maximale parmi les données R fournies au pixel rouge, les données G fournies au pixel vert et les données B fournies au pixel bleu de chaque pixel unitaire d'une région d'affichage (DM1, ..., DM16) ;
un calculateur de valeur moyenne (505) pour calculer une valeur moyenne à partir d'une somme des valeurs de données de tous les pixels unitaires (PX) sélectionnés par le sélecteur de valeur maximale (504) pour chaque région d'affichage (DM1, ..., DM16), en générant de ce fait n valeurs de données moyennes pour les n régions d'affichage (DM1, ..., DM16) ;
- une unité de génération de signal de gradation (506) recevant les n valeurs de données moyennes pour les n régions d'affichage (DM1, ..., DM16) pour générer n signaux de gradation ayant chacun un rapport cyclique correspondant à la valeur de données moyennes pour la région d'affichage correspondante ;
- une unité de filtrage sélectif (551) comprenant une unité de sortie de signal de régulation (553) et un filtre (552), l'unité de sortie de signal de régulation (553) étant apte à recevoir les n signaux de gradation des trames actuelles et à effectuer une comparaison de données moyennes pour chaque région d'affichage (DM1, ..., DM16) dans chaque trame entre des valeurs de données moyennes actuellement fournies pour la trame actuelle et des valeurs de données moyennes précédemment mémorisées pour la trame précédente, et calcule une différence de données moyennes (D) pour chaque région d'affichage, dans lequel la différence de données moyennes (D) est comparée à une valeur d'échelle de gris de référence prédéterminée, sur la base des résultats de la comparaison pour toutes les régions d'affichage (DM1, ..., DM16), l'unité de sortie de signal de régulation (553) étant apte à déterminer le nombre de régions d'affichage ayant une différence de données moyennes (D) dépassant la valeur d'échelle de gris de référence prédéterminée, dans lequel, sur la base des résultats de la détermination, l'unité de sortie de signal de régulation (553) est apte à délivrer un premier signal de régulation ou un deuxième signal de régulation,
dans lequel le premier signal de régulation est délivré lorsque le nombre est supérieur à une valeur de seuil prédéterminée et le deuxième signal de régulation est délivré lorsque le nombre est inférieur ou égal à la valeur de seuil prédéterminée,
dans lequel le filtre (552) est apte à recevoir le premier ou deuxième signal de régulation et reçoit les n signaux de gradation en provenance de l'unité de génération de signal de gradation (506),
dans lequel, lorsque le premier signal de régulation est fourni à l'unité de sortie de signal de régulation (553), le filtre (552) est apte à moduler la valeur de données moyennes de chaque région d'affichage dans la trame actuelle en la valeur moyenne obtenue à partir de la somme de la valeur de données moyennes de la région d'affichage dans la trame actuelle et des valeurs de données moyennes de la région d'affichage dans plusieurs trames précédentes, pour de ce fait régler à nouveau les rapports cycliques des signaux de gradation fournis à partir de l'unité de génération de signal de gradation (506) sur la base de la valeur de données moyennes modulée,
dans lequel, lorsque le deuxième signal de régulation est fourni à partir de l'unité de sortie de signal de régulation (553), le filtre (552) est apte à délivrer les signaux de gradation à partir de l'unité de génération de signal de gradation (506) sans aucune modulation ;
- une unité de sortie de signal de gradation séquentielle (508) pour délivrer et fournir séquentiellement les n signaux de gradation de l'unité de filtrage sélectif (507) à une unité de commande de source lumineuse (509) de l'appareil de commande de rétroéclairage pour commander à des sources lumineuses (r, g, b) d'une unité de rétroéclairage (200) d'irradier une lumière sur le panneau d'affichage (10) ;
dans lequel l'unité de commande de source lumineuse (509) est apte à générer des signaux de modulation de largeur d'impulsion sur la base des n signaux de gradation et à fournir les signaux de modulation de largeur d'impulsion aux sources lumineuses (r, g, b) pour amener les sources lumineuses (r, g, b) à émettre une lumière.

2. Procédé de commande d'un circuit de commande de rétroéclairage, comprenant :
A) la division d'une zone d'affichage d'un panneau d'affichage (10) comprenant une pluralité de pixels (PX) et la zone d'affichage sur laquelle une image est affichée en n régions d'affichage (DM1, ..., DM16), dans lequel « n » est un nombre naturel supérieur ou égal à 2, et le calcul d'une valeur moyenne de données fournies à chacune des régions d'affichage (DM1, ..., DM16), en générant de ce fait n valeurs de données moyennes ;
B) la génération de n signaux de gradation ayant chacun un rapport cyclique correspondant à la valeur de données moyennes de la région d'affichage correspondante ;
C) la comparaison des n valeurs de données moyennes actuellement fournies pour une trame actuelle aux valeurs de données moyennes précédemment mémorisées pour une trame précédente, pour déterminer le degré de variation d'une image de la trame actuelle par rapport à une image de la trame précédente, et la délivrance des n signaux de gradation pour la trame actuelle après la modulation de rapports cycliques des signaux de gradation pour la trame actuelle ou la délivrance des n signaux de gradation pour la trame actuelle sans aucune modulation des rapports cycliques ;
D) la délivrance séquentielle des n signaux de gradation et la fourniture des n signaux de gradation à une unité de commande de source lumineuse (509) pour commander des sources lumineuses (r, g, b) d'une unité de rétroéclairage (200) comprenant une pluralité de sources lumineuses (r, g, b) pour irradier une lumière sur le panneau d'affichage (10), dans lequel l'unité de commande de source lumineuse (509) génère des signaux de modulation de largeur d'impulsion sur la base des n signaux de gradation,
dans lequel l'étape A) comprend la génération des n valeurs de données moyennes pour des régions d'affichage respectives (DM1, ..., DM16) par le calcul d'une valeur de données moyennes fournie à des pixels (PX) dans chaque région d'affichage, dans lequel les pixels (PX) comprennent une pluralité de pixels rouges (R) pour afficher une image rouge, une pluralité de pixels verts (G) pour afficher une image verte, et une pluralité de pixels bleus (B) pour afficher une image bleue, dans lequel chaque pixel unitaire pour afficher une image unitaire comprend trois pixels de couleurs différentes (PX) se composant d'un pixel rouge, d'un pixel vert et d'un pixel bleu ;
dans lequel l'étape A) comprend en outre :
1) l'analyse des données rouges (R), des données vertes (G), et des données bleues (B) fournies à partir d'un système (400) et la division de la zone d'affichage (777) en une pluralité de régions d'affichage (DM1, ..., DM16), sur la base des résultats de l'analyse ;
2) la sélection de données ayant une valeur maximale parmi les données R fournies au pixel rouge de chaque pixel unitaire dans une région d'affichage, les données G fournies au pixel vert du pixel unitaire et les données B fournies au pixel bleu du pixel unitaire ;
3) le calcul d'une valeur moyenne à partir d'une somme des valeurs de données de tous les pixels unitaires (PX) sélectionnés par le sélecteur de valeur maximale (504) pour la région d'affichage, en obtenant de ce fait une valeur de données moyennes pour la région d'affichage ;
dans lequel l'étape C) comprend l'exécution d'une comparaison de données moyennes pour chaque région d'affichage dans chaque trame, le calcul d'une différence de données moyennes (D) pour chaque région d'affichage, sur la base du résultat de la comparaison de données moyennes, la comparaison de la différence calculée à une valeur d'échelle de gris de référence prédéterminée, la détermination du nombre de régions d'affichage (DM1, DM16) ayant chacune une différence de données moyennes dépassant la valeur d'échelle de gris de référence prédéterminée, sur la base du résultat de la comparaison, la modulation de la valeur de données moyennes de chaque région d'affichage dans la trame actuelle à une valeur moyenne obtenue à partir d'une somme de la valeur de données moyennes de la région d'affichage dans la trame actuelle et des valeurs de données moyennes de la région d'affichage dans plusieurs trames précédentes, sur la base du résultat de la détermination, pour régler à nouveau les rapports cycliques des signaux de gradation fournis à l'étape B), et la délivrance des signaux de gradation modulés ou la délivrance des signaux de gradation fournis à l'étape B) sans aucune modulation ;
dans lequel l'étape C) comprend :
l'exécution d'une comparaison de données moyennes pour chaque région d'affichage par la comparaison des valeurs de données moyennes actuellement fournies pour la trame actuelle à des valeurs de données moyennes précédemment mémorisées pour la trame précédente ;
le calcul d'une différence de données moyennes pour chaque région d'affichage sur la base du résultat de la comparaison de données moyennes, dans lequel la différence de données moyennes est calculée par la soustraction de la valeur de données moyennes de la trame précédente à la valeur de données moyennes de la trame actuelle ;
la comparaison de la différence de données moyennes calculée à une valeur d'échelle de gris de référence prédéterminée ;
la détermination du nombre de régions d'affichage (DM1, ..., DM16) ayant chacune une différence de données moyennes dépassant la valeur d'échelle de gris de référence prédéterminée, sur la base du résultat de la comparaison ;
la délivrance d'un premier signal de régulation ou d'un deuxième signal de régulation, sur la base du résultat de la détermination, dans lequel le premier signal de régulation est délivré lorsque le nombre déterminé est supérieur à une valeur de seuil prédéterminée et le deuxième signal de régulation est délivré lorsque le nombre déterminé est inférieur ou égal à la valeur de seuil prédéterminée ; et
la modulation de la valeur de données moyennes de chaque région d'affichage dans la trame actuelle en une valeur moyenne obtenue à partir d'une somme de la valeur de données moyennes de la région d'affichage dans la trame actuelle et des valeurs de données moyennes de la région d'affichage dans plusieurs trames précédentes, lorsque le premier signal de régulation est délivré, pour régler à nouveau les rapports cycliques des signaux de gradation fournis à l'étape B) sur la base de la valeur de données moyennes modulée, tout en délivrant les signaux de gradation fournis à l'étape B) sans aucune modulation lorsque le deuxième signal de régulation est délivré.
